# EUROPÄISCHE PATENTSCHRIFT

(11) **EP 1 441 432 B1**
(45) Veröffentlichungstag und Bekanntmachung des Hinweises auf die Patenterteilung: **06.06.2007**
(21) Anmeldenummer: 03027967.3
(22) Anmeldetag: 05.12.2003
(51) Int. Cl.: H02K 5/173

(54) **Aussenläufermotor, insbesondere Klein- oder Kleinstmotor**
Motor with external rotor, in particular a small-sized or miniature motor
Moteur à rotor extérieur, notamment un moteur de petite taille ou un moteur miniature

(30) Priorität: 23.01.2003 DE 20301009 U
(43) Veröffentlichungstag der Anmeldung: 28.07.2004
(73) Patentinhaber: ebm-papst St. Georgen GmbH & Co. KG, 78112 St. Georgen (DE)
(72) Erfinder: Lulic, Francisco Rojo, 78112 St. Georgen (DE)
(74) Vertreter: Raible, Tobias

(56) Entgegenhaltungen:
- WO-A-89/05537
- US-A- 5 343 104

## Beschreibung

Die Erfindung betrifft einen Außenläufermotor, insbesondere einen Klein- oder Kleinstmotor.

Klein- oder Kleinstlüfter dienen z.B. zur Kühlung von Prozessoren in Computern, zur Gerätekühlung bei kleinen Geräten, etc., und sie haben sehr kleine Abmessungen. Z.B. haben
- die Lüfter der ebm-papst-Serie 250 Abmessungen von 8 x 25 x 25 mm,
- die der ebm-papst-Serie 400F Abmessungen von 10 x 40 x 40 mm,
- die der ebm-papst-Serie 400 von 20 x 40 x 40 mm,
- und die Lüfter der ebm-papst-Serie 600 von 25,4 x 60 x 60 mm.
Die Leistungsaufnahme solcher Lüfter liegt bei der Serie 250 bei 0,4 ... 0,6 W, bei der Serie 400F bei 0,7...0,9 W, und bei den Serien 400 und 600 bei 0,9...1,6 W.

Außenläufermotoren in Form von Klein- oder Kleinstmotoren werden häufig zum Antrieb von Lüftern verwendet, die z. B. in Computern zur Kühlung von Prozessoren dienen. Die Teile solcher Motoren sind so klein, dass sie wie Spielzeuge oder Teile von Uhren aussehen. Dabei ist es notwendig, dass solche Motoren trotz ihrer kleinen Bauteile in einfacher Weise, mit einer hohen Präzision, und preiswert montiert werden können, bevorzugt mittels einer automatisierten Montage.

Aus der WO 89/05537 kennt man einen AuBenläufermotor mit einem Lagerrohr, in welchem sich Kugellager zur Lagerung des Außenrotors befinden. Mittels einer Scheibe aus Federstahl, welche am Statorblechpaket befestigt ist und Vorsprünge hat, die bei der Montage in die Außenseite des Lagerrohrs eingreifen, ist eine entsprechende Befestigung vorgesehen. Das Statorblechpaket ist auf seiner Innenseite mit einer axialen Nut versehen, die auf einer Verdrehsicherung am Lagerrohr geführt ist.

Aus der US 5 343 104 kennt man einen Außenläufermotor mit einem Lagerrohr, in das ein Gleitlager eingepresst ist. In diesem Gleitlager ist der Außenrotor dieses Motors gelagert. Das Statorblechpaket dieses Motors ist bis zu einem Anschlag auf die Außenseite des Lagerrohres aufgeschoben. Es ist mit einem Spulenkörper aus Kunststoff versehen, der aus zwei Halbschalen zusammengesetzt ist. Dieser Spulenkörper hat nach innen ragende Vorsprünge und seitliche Ausnehmungen. Die Vorsprünge sind in entsprechende Vertiefungen des Lagerrohres eingerastet, und seitliche Vorsprünge des Lagerrohrs sind in die ihnen zugeordneten seitlichen Ausnehmungen des Spulenkörpers eingerastet.

Es ist deshalb eine Aufgabe der Erfindung, einen neuen Außenläufermotor bereitzustellen.

Nach der Erfindung wird diese Aufgabe gelöst durch einen Außenläufermotor gemäß Anspruch 1.

Das mindestens eine Teil der ringförmigen Sicherungsscheibe, das in die Innenausnehmung des Innenstators ragt, biegt sich bei der Montage um, greift nach Art eines Widerhakens in die Außenseite des Lagertragrohres ein, und wird auf diese Weise beim Zusammenschieben von Innenstator und Lagertragrohr an Letzterem sicher arretiert. Die Sicherungsscheibe wirkt dabei nach Art eines Widerhakens. Bei einer Stoßbelastung bohrt sie sich tiefer in den Werkstoff des Lagertragrohres, gewöhnlich einen Kunststoff oder eine Aluminiumlegierung, so dass eine sehr sichere Befestigung entsteht, deren Demontage praktisch nicht mehr möglich ist. Dabei ist die Montage denkbar einfach, kann schnell und auch automatisiert erfolgen, und ergibt ein Produkt mit der erforderlichen hohen Präzision.

Die Form der Sicherungsscheibe kann variieren. Diese kann eine oder mehrere Krallen unterschiedlicher Form haben, wobei sich die optimale Form nach der jeweiligen Anwendung richtet.

Weitere Einzelheiten und vorteilhafte Weiterbildungen der Erfindung ergeben sich aus dem im Folgenden beschriebenen und in der Zeichnung dargestellten, in keiner Weise als Einschränkung der Erfindung zu verstehenden Ausführungsbeispiel sowie aus den Unteransprüchen. Es zeigt:
- Fig. 1: eine Draufsicht auf eine bevorzugte Form einer ringförmigen Sicherungsscheibe, wie sie bei der vorliegenden Erfindung Verwendung finden kann,
- Fig. 2: einen Längsschnitt durch den Stator eines Außenläufermotors, der mit einer ringförmigen Sicherungsscheibe gemäß Fig. 1 versehen ist, gesehen längs der Linie II-II der Fig. 3,
- Fig. 3: eine Draufsicht auf den Stator der Fig. 2, gesehen in Richtung des Pfeiles III der Fig. 2,
- Fig. 4: eine Darstellung des Innenstators der Fig. 2 und 3, aber in einem Schnitt längs der Linie IV-IV der Fig. 3, und zu Beginn der Montage des Innenstators auf einem Lagertragrohr,
- Fig. 5: eine vergrößerte Darstellung der Einzelheit V der Fig. 4,
- Fig. 6: eine Darstellung analog Fig. 4, bei welcher der Innenstator in seiner endgültigen Lage auf dem Lagertragrohr montiert ist, und
- Fig. 7: eine vergrößerte Darstellung der Einzelheit VII der Fig. 6.

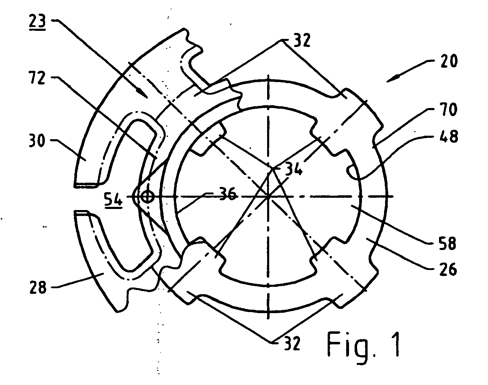

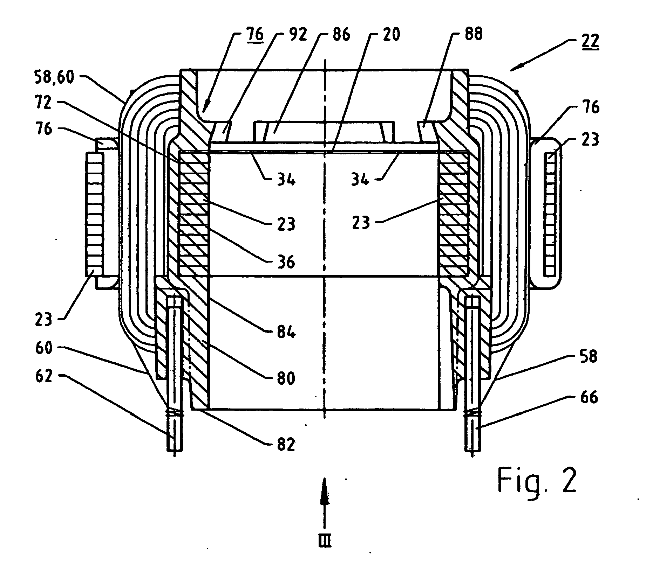

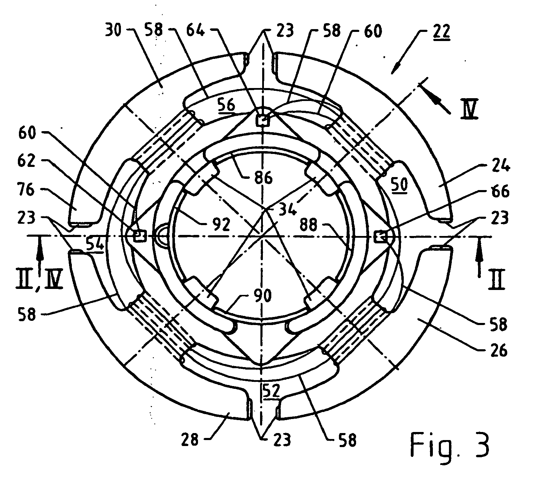

Fig. 1 zeigt einen Sicherungsring 20, wie er im vorliegenden Fall für einen Innenstator 22 (Fig. 2 und 3) mit einem Blechpaket 23 mit vier ausgeprägten Polen 24, 26, 28, 30 verwendet wird. In Anpassung an diese vier Statorpole hat der Sicherungsring 20 vier radial nach außen ragende Vorsprünge 32 und vier radial nach innen ragende Vorsprünge 34. Zwei Pole 28, 30 des Blechpakets 23 sind in Fig. 1 strichpunktiert angedeutet.

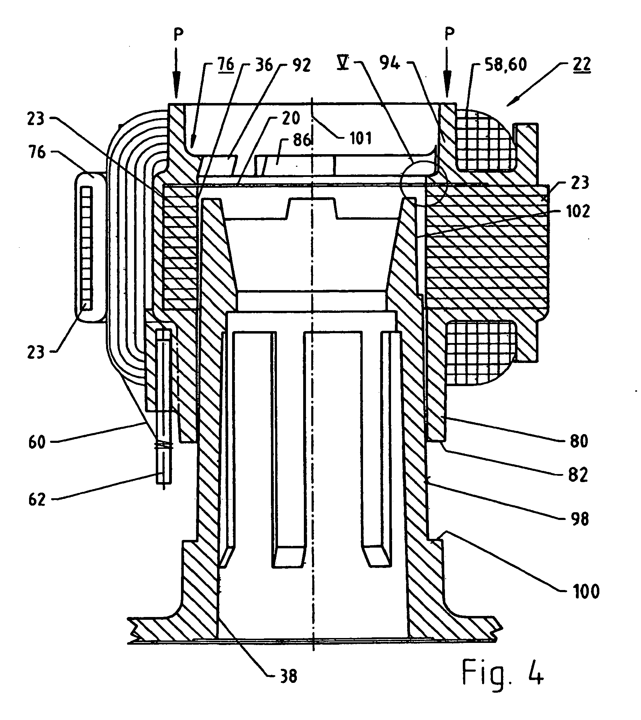

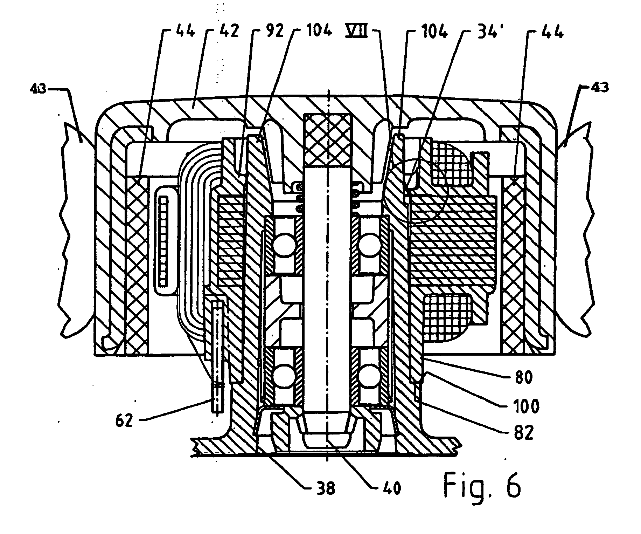

Das Blechpaket 23 hat eine Innenausnehmung 36, welche auf ein in Fig. 4 und 6 dargestelltes Lagertragrohr 38 aufgeschoben werden kann. Wie in Fig. 6 dargestellt, wird im Lagertragrohr 38 die Welle 40 eines Außenrotors 42 gelagert, dessen Dauermagnete 44 mit den Polen 24 bis 30 des Innenstators 22 in bekannter Weise zusammenwirken. Die Wirkungsweise solcher Motoren, wie sie in Millionen-Stückzahlen hergestellt werden, ist dem Fachmann bekannt und braucht deshalb nicht beschrieben zu werden. An der Außenseite des Rotors 42 sind bevorzugt Lüfterflügel 43 vorgesehen.

Wie Fig. 2 zeigt, ist der Sicherungsring 20 bevorzugt auf das obere Ende des Blechpakets 23 aufgelegt, so dass sein innerer Durchmesser 48 mit dem Durchmesser einer Innenausnehmung 36 des Blechpakets 23 im Wesentlichen übereinstimmt, wobei die Vorsprünge 34 in die Innenausnehmung 36 ragen, vgl. Fig. 3, 5, 7. Der Außendurchmesser des Blechpakets 23 betrug bei einem Muster z.B. 22 mm, der Durchmesser einer Ausnehmung 84 etwa 10 mm.

Zwischen den Statorpolen 24 bis 30 befinden sich Nuten 50, 52, 54, 56, in die eine Wicklung mit zwei Phasen 58, 60 gewickelt ist, deren Wicklungssinn und Schaltungsweise aus Fig. 3 für dieses Ausführungsbeispiel klar hervorgeht und deren Wicklungsenden mit drei Stiften 62, 64, 66 in der Weise verbunden sind, dass die einen Enden beider Phasen 58, 60 mit dem Stift 64 verbunden sind, das andere Ende der Phase 60 mit dem Stift 62, und das andere Ende der Phase 58 mit dem Stift 66.

Im Bereich der Nuten 50 bis 56 stimmt der äußere Durchmesser 70 des Sicherungsrings 20 bevorzugt mit dem dortigen äußeren Durchmesser 72 (Fig. 1) des Blechpakets 23 überein, während im Bereich der Pole 24 bis 30 die radialen Vorsprünge 32 angeordnet sind und folglich in diese Pole hineinragen und dort den Querschnitt des magnetischen Kreises im Stator 22 und dadurch den Wirkungsgrad des Motors verbessern.

Das Blechpaket 23 ist, mit Ausnahme seines Außenumfangs, mit einer isolierenden Beschichtung 76 versehen, welche auch die Nuten 50 bis 56 isoliert und dadurch einen Spulenkörper für die Wicklungsphasen 58, 60 bildet. Diese Beschichtung 76 fixiert auch die Stifte 62, 64, 66 in der dargestellten Weise isolierend am Innenstator 22, und sie fixiert den Sicherungsring 20 am oberen Ende des Blechpakets 23, vgl. Fig. 2.

Ferner bildet die Beschichtung 76 am unteren Ende (bezogen auf Fig. 2) des Stators 22 einen rohrartigen Fortsatz 80 mit einem unteren Rand 82, dessen Innenausnehmung 84 im Wesentlichen denselben Durchmesser hat wie die Ausnehmung 36 des Blechpakets 23.

Nach oben hin, bezogen auf Fig. 2, verjüngt sich die Beschichtung 76 an ihren Abschnitten 86, 88, 90, 92, welche, in Umfangsrichtung gesehen, zwischen den Vorsprüngen 34 des Sicherungsringes 20 liegen. Ferner erstreckt sich nach oben ein Kragen 94 (Fig. 4), der ein Teil des Wickelkörpers für die Phasen 58, 60 ist. (Die Phasen 58, 60 sind sogenannte bifilare Wicklungen, d. h. die Drähte 58 und 60 werden parallel gewickelt.) Wie aus Fig. 4 hervorgeht, hat das Lagertragrohr 38 außen eine kegelstumpfförmige Umfangsfläche 98, die sich nach unten bis zu einer Schulter 100 erstreckt. Im oberen Teil dieser Umfangsfläche 98 sind im Abstand von je 90 Grad vier Längsnuten 102 vorgesehen, deren Abstand von einer Mittelachse 101 von oben nach unten zunimmt. Die Längsnuten 102 dienen zur Längsführung der inneren Vorsprünge 34 des Sicherungsringes 20 und zur radialen Sicherung, da ihre Breite im Wesentlichen mit der Breite der Vorsprünge 34 (Fig. 1 und 3) übereinstimmt, so dass auch die Umfangslage des Stators 22 relativ zum Lagertragrohr 38 genau definiert ist. Dies ist deshalb wichtig, weil der - nicht dargestellte - Rotorstellungssensor des Motors am Lagertragrohr 38 befestigt wird und eine vorgegebene Winkelstellung relativ zum Stator 22 haben muss.

Gemäß Fig. 4 wird der Stator 22 in der richtigen Winkelstellung auf das Lagertragrohr 38 aufgesetzt und mit einer Kraft P nach unten gedrückt. Dabei wird der rohrartige Teil 80 auf den Außenumfang 98 des Lagertragrohrs 39 so weit aufgepresst, bis sein unteres Ende 82 gegen die Schulter 100 stößt.

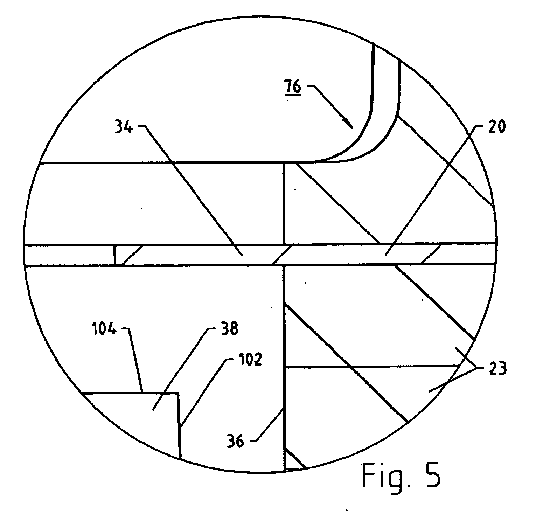

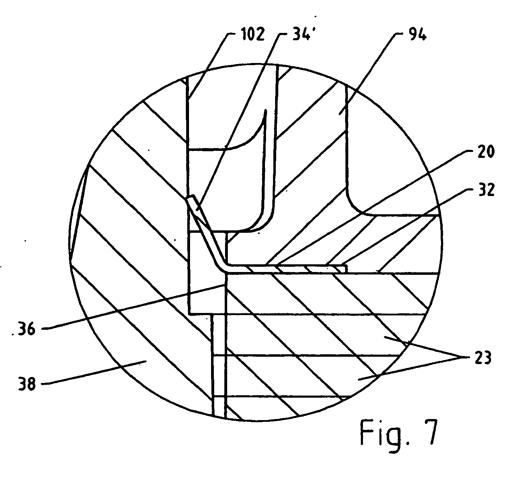

Hierbei stoßen, wie in Fig. 4 und 5 angedeutet, die inneren Vorsprünge 34 des Sicherungsringes 20 gegen das in Fig. 5 und 6 mit 104 bezeichnete obere Ende des Lagertragrohres 38 und werden gemäß Fig. 6 und 7 nach oben umgebogen. Fig. 7 zeigt einen solchen Vorsprung in seinem umgebogenen Zustand 34', in dem dieser in der zugeordneten Längsnut 102 so verrastet wird, dass eine Demontage in der Praxis nicht mehr möglich ist.

Gleichzeitig legen sich auch die Abschnitte 86, 88, 90 und 92 elastisch gegen den Außenumfang 98 des Lagertragrohres 38 und bewirken eine zusätzliche Zentrierung und Sicherung, um eine etwaige unsymmetrische Befestigung des Stators 22 auf dem Lagertragrohr 38 zu verhindern.

Man erhält so eine sehr einfache und absolut sichere Befestigung des Stators 22 auf dem Lagertragrohr 38, die sich sehr gut für eine automatisierte Fertigung eignet, auch bei einer sehr kleinen Baugröße des Motors.

Naturgemäß sind im Rahmen der Erfindung vielfache Abwandlungen und Modifikationen möglich. Insbesondere kann die Anwendung der Erfindung auch bei größeren Außenläufermotoren sehr vorteilhaft sein.

## Patentansprüche

1. Außenläufermotor, welcher aufweist:
einen Innenstator (22), welcher ein Blechpaket (23) aufweist, das mindestens bereichsweise mit einer Beschichtung (76) versehen ist, welcher Innenstator (22) eine Innenausnehmung (36) aufweist;
einen Außenrotor (42);
ein Lagertragrohr (38), welches auf seiner Innenseite eine Lageranordnung zur drehbaren Lagerung des Außenrotors (42) aufweist und welches auf seiner Außenseite (98) Führungsnuten (102) aufweist;
eine in der Beschichtung (76) des Blechpakets (23) befestigte ringförmige Sicherungsscheibe (20), welche mindestens an ihrem Innenumfang (48) mit einer Mehrzahl von Vorsprüngen (34) versehen ist, welche nach innen in die Innenausnehmung (36) des Innenstators (22) ragen und welche in den Führungsnuten (102) des Lagertragrohrs (38) geführt sind, wobei die Breite mindestens eines Teils der in die Innenausnehmung (36) ragenden Vorsprünge (34) mit der Breite der jeweils zugeordneten, am Lagertragrohr (38) vorgesehenen Führungsnut (102) im wesentlichen übereinstimmt,
wobei
mindestens einer der Vorsprünge (34) so ausgebildet ist, dass er beim Vorgang des Zusammenschiebens von Innenstator (22) und Lagertragrohr (38) umgebogen wird und in dieser umgebogenen Stellung in der zugeordneten Führungsnut (102) in die Außenseite des Lagertragrohrs (38) nach Art eines Widerhakens (34') eingreift und so den Innenstator gegen Abziehen vom Lagertragrohr (38) sichert.

2. Außenläufermotor nach Anspruch 1, bei welchem die Sicherungsscheibe (20) aus einem ferromagnetischen Werkstoff ausgebildet und im Bereich des Blechpakets (23) des Innenstators (22) angeordnet ist.

3. Außenläufermotor nach Anspruch 1 oder 2, bei welchem die ringförmige Sicherungsscheibe (20) benachbart zum Blechpaket (23) des Innenstators (22) angeordnet ist.

4. Außenläufermotor nach einem der vorhergehenden Ansprüche, bei welchem der Innenstator (22) im montierten Zustand gegen einen am Lagertragrohr (38) vorgesehenen Anschlag (100) anliegt.

5. Außenläufermotor nach einem der vorhergehenden Ansprüche, bei welchem an der Peripherie des Außenrotors (42) Lüfterflügel (43) vorgesehen sind.

6. Außenläufermotor nach einem der vorhergehenden Ansprüche, welcher als Klein- oder Kleinstmotor ausgebildet ist.

7. Außenläufermotor nach einem der vorhergehenden Ansprüche, welcher als Antriebsmotor eines Klein- oder Kleinstlüfters ausgebildet ist.

## Claims

1. External rotor motor which comprises:
an internal stator (22) which comprises a laminations pack (23) which is provided with a coating (76) at least in areas, which internal stator (22) comprises an internal recess (36);
an external rotor (42);
a bearing supporting tube (38) which on its inside comprises a bearing arrangement for rotatable mounting of the external rotor (42) and on its outside (98) comprises guide slots (102);
a ring-shaped locking washer (20) which is fastened in the coating (76) of the laminations pack (23) and at least on its internal circumference (48) is provided with a plurality of projections (34) which extend inwards into the internal recess (36) of the internal stator (22) and
which are guided in the guide slots (102) of the bearing supporting tube (38), the breadth of at least one part of the projections (34) extending into the internal recess (36) essentially matching the breadth of the associated guide slot (102) provided on the bearing supporting tube (38) ;
in which at least one of the projections (34) is embodied so that it is bent over during the operation in which the internal stator (22) and the bearing supporting tube (38) are slid together and in this bent position in the associated guide slot (102) engages in the outside of the bearing supporting tube (38) in the manner of a barb (34') and so prevents the internal stator from being pulled off the bearing supporting tube (38).

2. External rotor motor according to claim 1, in which the locking washer (20) is made of a ferromagnetic material and is arranged in the area of the laminations pack (23) of the internal stator (22).

3. External rotor motor according to claim 1 or 2, in which the ring-shaped locking washer (20) is arranged in the vicinity of the laminations pack (23) of the internal stator (22).

4. External rotor motor according to one of the preceding claims, in which the internal stator (22) bears against a stop (100) provided on the bearing supporting tube (38) in the assembled state.

5. External rotor motor according to one of the preceding claims, in which fan blades (43) are provided on the periphery of the external rotor (42).

6. External rotor motor according to one of the preceding claims, which is embodied as a small or miniature motor.

7. External rotor motor according to one of the preceding claims, which is embodied as a driving motor of a small or miniature fan.

## Revendications

1. Moteur à rotor extérieur, lequel présente :
un stator intérieur (22), lequel présente un paquet de tôles (23) qui est muni au moins par endroits d'un revêtement (76), lequel stator intérieur (22) présente un évidement intérieur (36) ;
un rotor extérieur (42) ;
un tube support de palier (38), lequel présente sur son côté intérieur un agencement de palier pour le montage à rotation du rotor extérieur (42) et lequel présente sur son côté extérieur (98) des rainures de guidage (102) ;
une rondelle d'arrêt annulaire (20) fixée dans le revêtement (76) du paquet de tôles (23), laquelle est munie au moins sur sa circonférence intérieure (48) d'une pluralité de saillies (34), lesquelles dépassent vers l'intérieur dans l'évidement intérieur (36) du stator intérieur (22) et lesquelles sont guidées dans les rainures de guidage (102) du tube support de palier (38), la largeur d'au moins une partie des saillies (34) dépassant dans l'évidement intérieur (36) coïncidant essentiellement avec la largeur de la rainure de guidage (102) respectivement associée prévue sur le tube support de palier (38),
au moins une des saillies (34) étant conçue de manière à être pliée lors du processus d'emboîtement du stator intérieur (22) et du tube support de palier (38) et, dans cette position pliée, à s'engager dans la rainure de guidage (102) associée dans le côté extérieur du tube support de palier (38) à la manière d'un crochet (34') et à assurer ou bloquer ainsi le stator intérieur contre son extraction du tube support de palier (38).

2. Moteur à rotor extérieur selon la revendication 1, dans lequel la rondelle d'arrêt (20) est réalisée dans un matériau ferromagnétique et disposée à l'endroit du paquet de tôles (23) du stator intérieur (22).

3. Moteur à rotor extérieur selon la revendication 1 ou 2, dans lequel la rondelle d'arrêt annulaire (20) est disposée au voisinage du paquet de tôles (23) du stator intérieur (22).

4. Moteur à rotor extérieur selon l'une des revendications précédentes, dans lequel le stator intérieur (22) s'appuie à l'état monté contre une butée (100) prévue sur le tube support de palier (38).

5. Moteur à rotor extérieur selon l'une des revendications précédentes, dans lequel des ailettes de ventilateur (43) sont prévues à la périphérie du rotor extérieur (42).

6. Moteur à rotor extérieur selon l'une des revendications précédentes, lequel est réalisé sous forme de mini- ou de micromoteur.

7. Moteur à rotor extérieur selon l'une des revendications précédentes, lequel est conçu comme moteur d'entraînement d'un mini- ou microventilateur.
